# EUROPEAN PATENT SPECIFICATION

(11) **EP 0 401 838 B1**
(45) Date of publication and mention of the grant of the patent: **26.04.1995**
(21) Application number: 90110833.2
(22) Date of filing: 07.06.1990
(51) Int. Cl.: B29C 67/20, B29C 44/00, C08J 9/35

(54) **Method of making a composite energy absorbing material**
Verfahren zur Herstellung eines Verbundstoffes für die Absorption von Energie
Procédé de fabrication d'un matériau composite pour l'absorption d'énergie

(30) Priority: 09.06.1989 US 363726
(43) Date of publication of application: 12.12.1990
(73) Proprietor: TIP ENGINEERING GROUP, INC., Farmington Hills, MI 48018 (US)
(72) Inventor: Powell, Richard E., Pleasant Ridge, MI 48069 (US); Bauer, David J., West Bloomfield, MI 48322 (US)
(74) Representative: Schaumburg, Thoenes & Thurn

(56) References cited:
- WO-A-88/09416
- DE-A- 3 436 592
- FR-A- 2 182 888
- GB-A- 1 070 874
- US-A- 3 429 955
- US-A- 4 328 320
- RESEARCH DISCLOSURE, May 1985, page 226, abstract no. 25315, S.J. Meredith,Structural Products, 3M, GB, PLC.; "Property modification of thermoplastics bythe use of glass bubbles"

## Description

This invention concerns a method of making energy absorbing materials usable about the interior of passenger automobile compartments.

It is now generally recognized that an effective measure for preventing injury during a collision is to absorb the momentum of passengers by controlled deformation of an interior panel structure. This enables dissipation of a person's momentum without imposing stresses which could cause serious injury. It has heretofore been proposed that crushing of a mass of spherically shaped shells of a rigid but frangible material such as glass or ceramic hollow spheres allowing dissipation of energy when impacted.

For application in automotive interiors such a material should preferably be in a structural panel form, and it is essential that the crush characteristics be uniform and predictable to insure proper performance in any type of crash situation.

There has been attempted the formation of an energy absorbing material by mixing such shells with liquid components of a thermosetting material such as polyurethane. The resulting panel is relatively heavy but more importantly exhibits random crush characteristics due to the difficulty in achieving a uniform dispersion of the shells in the slurry. Also, the presence of the relatively rigid matrix material in the interstices between the shells reduces the effectiveness of the composite as an energy absorbing medium.

Another drawback is the difficulty of applying such process to the mass production of parts necessary in the manufacture of automobiles.

US-A-3 429 955 discloses a method of producing shaped articles having an increased compressive strength from discrete multicellular glass nodules embedded in polystyrene. In this known method the multicellular glass nodules are firstly polystyrene coated before being admixed with polystyrene pellets to thereby achieve that said pellets adhere to the nodules through the admixture to get a uniform distribution of the nodules and the pellets before molding said articles. Such material having an increased compressive strength does not meet the requirements of an energy absorbing material. Furthermore the coating of the glass nodules is very hard and costly.

### Summary of the Invention

The present invention according to claim 1 comprises a method of making a composite energy absorbing material composed of a uniform distribution of hollow crushable shells held together to form a member usable as an automotive interior part capable of absorbing passenger impact during a crash.

Further preferred embodiments are given in the dependent claims.

In a first embodiment according to claim 1, a dry mix of thermoplastic beads of an expandable polymer such as polystyrene and the frangible shells are formed, mixed together to form a dry solution in which the thermoplastic beads and ceramic shells have a relatively uniform distribution through the entire mass.

The mixture is then introduced into a mold, and the thermoplastic beads are expanded by the application of heat (as in a steam chest) causing expansion of the beads to fill the interstices and enable the shape of the part to be held.

The resulting part is lightweight and has predictable, uniform energy absorbing characteristics throughout, and the expanded polymer matrix material contributes to the energy absorbing characteristic of the composite. The manufacturing process is well suited to mass production techniques.

In a second embodiment in accordance with claim 7 a relatively rigid plate may be installed overlying the absorbing material to distribute the impact force over a larger area and increase the systems capacity to absorb energy.

### Description of the Drawings

FIGURE 1 is a diagrammatic flow chart of a process of making a part of the composite energy absorbing material according to a first embodiment of the present invention.

FIGURE 2 is an enlarged fragmentary view of an energy absorbing composite panel according to a second embodiment of the present invention.

### Detailed Description

In the following detailed description, certain specific terminology will be employed for the sake of clarity, and particular embodiments are described, but it is to be understood that the same is not intended to be limiting and should not be so construed inasmuch as the invention is capable of taking many forms and variations within the scope of the appended claims.

According to a first embodiment of the present invention, a uniformly mixed "dry solution" of beads is prepared, comprised of suitable proportions of frangible rigid hollow shells, as of glass or ceramic material, and thermoplastic beads, such as polystyrene, polypropylene or polyethylene plastic. These thermoplastic beads are typically sized on the order of 1/2 - 3/4 mil in diameter. Such proportion is selected to achieve a desired energy absorbing characteristic, but the volume of the frangible shells will typically range from 25 -75% of the total volume of the composite.

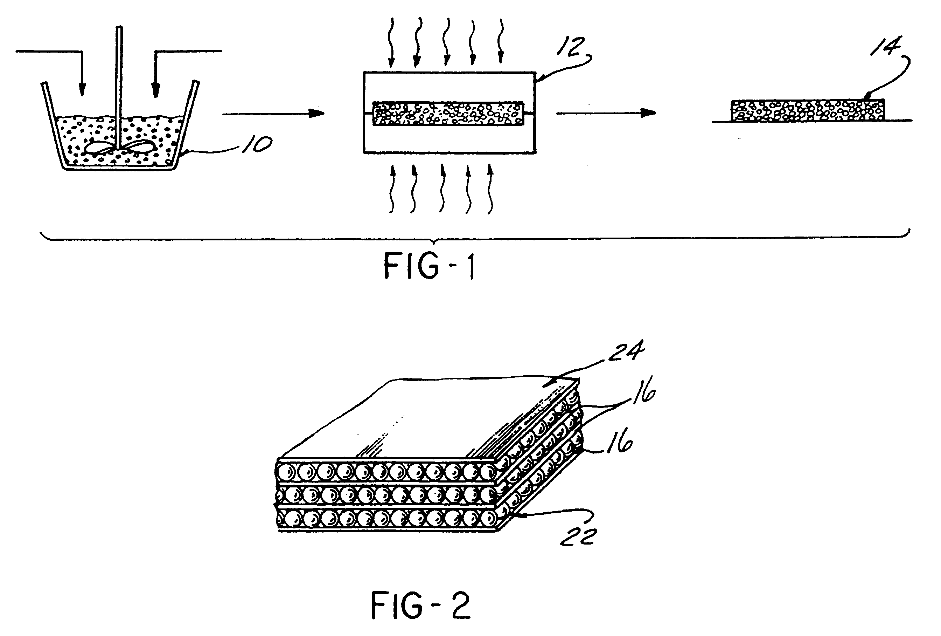

As depicted in FIGURE 1, by stirring the bead and shell mixture in a container 10, a relatively uniform dispersal of the respective materials can be achieved, i.e., in effect a dry solution of the thermoplastic beads and frangible shells in each other.

In manufacturing the part, a quantity of the mixture is drawn, as by a conventional vacuum feed, into a mold 12 having a cavity shaped in accordance with the part to be produced.

Heat is applied, as by enclosing the mold 12 in a steam chest or by any various means, to heat the mixture to a temperature whereat the expandable polymer beads are caused to expand. The steam may also be injected into the mold cavity itself. This material is well known, as is the technique for expanding the beads, in other contexts, and hence the details are not here set out. Suffice it to say, such beads have hollow voids containing air, which expand upon heating, and since the material also softens, the entire bead expands in volume.

Since the bead and shell mixture is confined in the mold cavity during such expansion, the polymer material expands to fill the entire interstitial space between the frangible shells. A certain clearance volume in the mold cavity must be provided to accommodate the degree of expansion to be undergone by the expandable thermoplastic beads.

Upon cooling of the mixture, the thermoplastic beads adhere to each other and the frangible shells to create an integral mass, shaped as the part 14, removed from the cavity of the mold 12.

The resultant composite material has a predictable energy absorbing characteristic, since a uniform dispersion of the frangible shells is achieved in the dry solution, which uniform dispersion is maintained by confinement of the quantity of mixture required to form the part during the expansion process.

The characteristic is superior to that heretofore achieved since the matrix material itself contributes in some degree to the energy dissipation upon crushing of the part.

It can be appreciated that the process is readily adapted to mass production volumes, and results in a lightweight material suitable for automotive application.

Referring to FIGURE 2, a further refinement of the composite energy absorbing material according to the present invention is shown, in which a relatively rigid plate 24, i.e., between 0.254 mm - 1.016 mm (.010 - .040 inch) thick aluminium, overlies a panel 22 made of the energy absorbing material in accordance with the process shown in FIGURE 1. This has the effect of distributing impact loads over a larger area, and increasing the energy absorbing capacity for any impact area across the panel 22.

As a further variation, the panel 22 may be provided with intermediate thin metal plates to enhance this distributive effect.

## Claims

1. A method of forming a composite energy absorbing material being crushable and having hollow frangible shells as a constituent, comprising the steps of:
dry mixing together a quantity of hollow frangible shells, with a quantity of thermoplastic beads that expand when heated to produce a dry solution of said shells and beads not being adhered to one another, in a uniform dispension thereof;
confining a quantity of said dry mix in a cavity; and
thereafter heating said mixture to cause said expandable beads to expand and entrap said frangible shells in a matrix of said expanded beads and form a crushable composite energy absorbing structure.

2. The method according to claim 1 wherein said expandable material comprises a polymer plastic.

3. The method according to claim 2 wherein said polymer plastic comprises polystyrene.

4. The method according to claim 2 wherein said polymer plastic is selected from the group of polystyrene, polyethylene, and polypropylene.

5. The method according to claim 1 wherein said cavity is configured in the shape of a part to be produced.

6. The method according to claim 1 further including the step of fixing a rigid plate atop said energy absorbing material to distribute impact loading thereof.

7. The method according to claim 1 wherein said hollow frangible shells are lightweight.

8. The method according to claim 1 wherein upon heating the expandable beads fill the interstitial spaces between said shells.

## Patentansprüche

1. Verfahren zum Herstellen eines energieabsorbierenden Kompositmaterials, das zerbrechbar ist und hohle zerbrechliche Schalen als Bestandteil enthält, umfassend die folgenden Schritte:
Zusammenmischen einer Menge hohler zerbrechlicher Schalen mit einer Menge aus thermoplastischen Perlen in trockenem Zustand, die sich bei Erwärmung ausdehnen, um eine trokkene Lösung dieser nicht aneinander haftenden Schalen und Perlen mit einer gleichförmigen Dispersion derselben zu bilden;
Einschließen einer Menge dieser trockenen Mischung in einem Hohlraum; und
anschließendes Erhitzen dieser Mischung, um die expansionsfähigen Perlen zur Expansion zu veranlassen und die zerbrechlichen Schalen in einer Matrix aus diesen expandierten Perlen einzuschließen und eine zerbrechbare energieabsorbierende Kompositstruktur zu bilden.

2. Verfahren nach Anspruch 1, bei dem das expansionsfähige Material aus einem Polymer-Kunststoff besteht.

3. Verfahren nach Anspruch 2, bei dem der Polymerkunststoff Polystyrol ist.

4. Verfahren nach Anspruch 2, bei dem der Polymerkunststoff aus der Polystyrol, Polyethylen und Polypropylen umfassenden Gruppe ausgewählt wird.

5. Verfahren nach Anspruch 1, bei dem der Hohlraum die Form eines herzustellenden Teiles hat.

6. Verfahren nach Anspruch 1, ferner umfassend den Schritt der Befestigung einer starren Platte auf dem energieabsorbierenden Material, um eine Aufprallbelastung über dieses zu verteilen.

7. Verfahren nach Anspruch 1, bei dem die hohlen zerbrechlichen Schalen ein geringes Gewicht haben.

8. Verfahren nach Anspruch 1, bei dem beim Erhitzen die expansionsfähigen Perlen den Zwischenraum zwischen den Schalen füllen.

## Revendications

1. Procédé de fabrication d'un matériau composite pour l'absorption d'énergie qui soit apte au broyage et possède comme constituant des coquilles creuses fragiles, comprenant les étapes consistant à:
mélanger à sec entre elles une quantité de coquilles creuses fragiles et une quantité de perles thermoplastiques qui sont dilatables quand elles sont chauffées, afin de produire une solution sèche de ces coquilles et perles qui n'adhèrent pas les unes aux autres, dans laquelle la distribution de celles-ci est uniforme;
confiner une quantité de ce mélange sec dans une cavité; et
chauffer ensuite ledit mélange de manière à amener les perles dilatables à se dilater et à piéger les coquilles fragiles dans une matrice desdites perles dilatées, et former une structure composite d'absorption d'énergie apte au broyage.

2. Procédé selon la revendication 1, dans lequel la matière dilatable comprend une matière plastique polymère.

3. Procédé selon la revendication 2, dans lequel la matière plastique polymère comprend du polystyrène.

4. Procédé selon la revendication 2, dans lequel la matière plastique polymère est choisie dans le groupe formé par le polystyrène, le polyéthylène, et le polypropylène.

5. Procédé selon la revendication 1, dans lequel ladite cavité est configurée avec la forme d'une pièce à produire.

6. Procédé selon la revendication 1, incluant en outre l'étape consistant à fixer une plaque rigide au dessus du matériau composite d'absorption d'énergie, afin de répartir sa charge sous impact.

7. Procédé selon la revendication 1, dans lequel les coquilles creuses fragiles sont légères.

8. Procédé selon la revendication 1, dans lequel les perles dilatables, lorsqu'elles sont chauffées, emplissent les espaces interstitiels entre les coquilles.
